# EUROPÄISCHE PATENTSCHRIFT

(11) **EP 1 116 874 B1**
(45) Veröffentlichungstag und Bekanntmachung des Hinweises auf die Patenterteilung: **18.10.2006**
(21) Anmeldenummer: 01100663.2
(22) Anmeldetag: 11.01.2001
(51) Int. Cl.: F02M 23/08

(54) **Verfahren zum Zuführen eines Kraftstoff-Luft-Gemisches an einen Verbrennungsmotor und Vorrichtung zum Durchführen des Verfahrens**
Method for feeding a combustion engine with a fuel-air mixture and device for performing the method
Procédé pour alimenter un moteur à combustion en mélange air-carburant et dispositif pour mettre en oeuvre ce procédé

(30) Priorität: 12.01.2000 DE 10000885
(43) Veröffentlichungstag der Anmeldung: 18.07.2001
(73) Patentinhaber: Moers, Geradus Henricus Cornelius, 6367 XZ Voerendaal (NL)
(72) Erfinder: Moers, Geradus Henricus Cornelius, 6367 XZ Voerendaal (NL)
(74) Vertreter: Paul, Dieter-Alfred

(56) Entgegenhaltungen:
- EP-A- 0 857 870
- WO-A-96/29511
- DE-A- 2 349 877
- DE-C- 262 205
- US-A- 3 539 157
- US-A- 3 866 585
- US-A- 4 250 856
- US-A- 4 336 780
- US-A- 4 422 423

## Beschreibung

Die vorliegende Erfindung betrifft ein Verfahren zum Zuführen eines Kraftstoff-Luft-Gemisches an einen verbrennungsmotor nach dem Oberbegriff von Anspruch1. Des weiteren betrifft der Erfindung eine Vorrichtung zur Durchfuhrung das Verfahrens nach dem Oberbegriff von Anspruch 6.

Solche Vorrichtungen sind bekannt und umfassen in der Regel einen Lufttrichter, der einlaßseitig an eine Primärluftzuführleitung sowie in der Verengung an eine Kraftstoffzuführleitung angeschlossen ist und auslaßseitig an die Ansaugleitung eines Verbrennungsmotors stromabwärts von der Motordrosselklappe angeschlossen ist. In dem Lufttrichter bildet sich stromabwärts von dessen Engstelle bei geöffneter oder teilweise geöffneter Drosselklappe durch den angesaugten Primärluftstrom ein Unterdruck, durch den über die in der Unterdruckzone angebrachte Kraftstoffleitung ein Kraftstoff bzw. eine Kraftstoff-Emulsion angesaugt und mit der Primärluft zu einem Kraftstoff-Luft-Gemisch vermischt wird.

Ein Problem bei solchen Vorrichtungen mit einem Lufttrichter besteht darin, daß bei einem bestimmten Öffnungswinkel der Motordrosselklappe der Unterdruck unterhalb der Drosselklappe wegfallen wird. Hierdurch wird der Verbrennungsmotor an der Verengung des Lufttrichters saugen, wodurch dessen physikalisches Wirkungsprinzip praktisch aufgehoben wird. In diesem Stadium tritt ein Drosseleffekt ein, wodurch das Kraftstoff-Luft-Gemisch ins Stocken gerät. Es ist dann erforderlich, dem Luftstrom oberhalb des Lufttrichters zusätzlich Kraftstoff zuzusetzen, was mit Hilfe einer sogenannten vollastanreicherungsvorrichtung geschieht. Dies hat jedoch den Nachteil, daß das Kraftstoff-Luft-Gemisch sehr fett wird.

In der NL 164 933 und der NL 164 118 wird daher eine Vorrichtung vorgeschlagen, durch die dem Kraftstoff-Luft-Gemisch stromabwärts der Drosselklappe Sekundärluft zugeführt wird, welche das Gemisch abmagert. Diese stromabwärts der Drosselklappe zugeführte Luft hat jedoch nur im Nullastbereich und am Anfang des Teillastbereiches einen Einfluß auf die Gemischzusammensetzung, während sie wenig Einfluß auf die progressive Zunahme der Kraftstoffzufuhr in den Primärluftstrom hat. Dies bedeutet, daß wenig Einfluß auf das fetter werden des Gemisches in Richtung vollastbereich des Motors besteht.

Aus der DE-OS 23 49 877 ist weiterhin eine Vorrichtung bekannt, bei welcher dem Kraftstoff-Luft-Gemisch im Expansionsgebiet eines Lufttrichters oberhalb der Drosselklappe Sekundärluft zugeführt wird. Die Sekundärluftzufuhr wird bei dieser Vorrichtung über ein mechanisches Steuergerät mit einer Barometerdose gesteuert, und eine Sekundärluftzufuhr findet nur statt, wenn der Druck der Außenluft abnimmt oder die Temperatur stark schwankt. Bei der bekannten Vorrichtung wird die Sekundärluftzufuhr keinen oder nur einen sehr geringen Einfluß auf die progressive Zunahme des Kraftstoffes in dem Primärluftstrom haben, da die Sekundärluft nur temporär bei zu geringen Drücken und dann auch nur in geringen Mengen zugeführt wird.

Ein verfahren und eine Vorrichtung zur Aufbereitung eines Kraftstoff-Luft-Gemisches für Verbrennungsmotoren der eingangs genannten Art sind aus der WO 96/29511 bekannt. Die bekannten vorrichtungen besitzen eine venturi-Anordnung mit einem ersten, konvergierenden Trichterabschnitt, der einlaßseitig an eine Primärluftzuführleitung anschließbar ist, und einem auslaßseitigen Expansionsabschnitt, der an eine Kraftstoff-Luft-Gemisch-zuführleitung eines Verbrennungsmotors stromaufwärts von der Motordrosselklappe anschließbar ist. Zwischen dem konvergierenden Trichterabschnitt und dem Expansionsabschnitt ist ein rohrförmiger Abschnitt vorgesehen. In dem konvergierenden Teil des Lufttrichters sind Ansaugöffnungen vorgesehen, über welche dem zugeführten Brennstoff-Luft-Gemisch ein Abgas zugemischt wird. Durch die Zuführung in dem konvergenten Teil des Venturis sollen eine Beschleunigung der Strömung und in der Folge stabile Grenzschichten erzielt werden.

Aus der DE 262205 A ist weiterhin ein Spritzvergaser für Kraftfahrzeuge der eingangs genannten Art bekannt. Bei diesem Spritzvergaser werden in dem Expansionsabschnitt eines doppelt wirkenden Lufttrichters aus einem Primärluftstrom und einem Brennstoff ein Kraftstoff-Primärluft-Gemisch hergestellt. Im Anschluß an den doppelt wirkenden Lufttrichter sind in einem Rohrabschnitt Sekundärluftansaugöffnungen vorgesehen, über welche ein Sekundärluftstrom angesaugt werden kann, um das Kraftstoff-Primärluft-Gemisch abzumagern, bevor es die Drosselklappe durchströmt.

In ähnlicher Weise ist aus dem Dokument "New Gas Mixer for Gas Engines" bekannt, ein Kraftstoff-Luft-Gemisch herzustellen, indem einem Primärluftstrom in dem Expansionsabschnitt eines Venturis ein Brennstoffgas zugeführt wird.

Schließlich ist aus der EP-A-0 857 870 eine venturianordnung bekannt, um ein Kraftstoff-Luft-Gemisch herzustellen. Bei dieser Anordnung wird einem Luftstrom ein Brennstoff zugeführt, der über an der Venturiengstelle vorgesehene Brennstoff zuführöffnungen angesaugt wird.

Aufgabe der Erfindung ist es, ein verfahren sowie eine Vorrichtung der eingangs genannten Art anzugeben, die es ermöglichen, das rtischverhältnis eines Kraftstoff-Luft-Gemisches, welches einem Verbrennungsmotor zugeführt wird, über den gesamten Drehzahl- und Lastbereich des Motors zumindest im wesentlichen konstant zu halten.

Bein einem Verfahren der eingangs genannten Art ist diese Aufgabe durch die kennzeichnenden Merkmale von Anspruch 1 gelöst. Des weiteren ist die Aufgabe bei einer Vorrichtung der eingangs genannten Art durch die kennzeichnenden Merkmale von Anspruch 6 gelöst.

Durch diese Ausgestaltung wird erreicht, daß bei zunehmender Strömungsgeschwindigkeit der Primärluft aufgrund der Venturiewirkung an den vorhandenen Ansaugöffnungen für die Sekundärluft der Sekundärluftstrom progressiv ansteigt, wodurch der Anstieg der Kraftstoffzufuhr kompensiert und das Mischungsverhältnis im wesentlichen konstant gehalten werden kann. Technisch erreicht werden kann dies, indem die Luftansaugöffnungen am Anfang des Expansionsabschnitts vorgesehen sind. Aufgrund der Tatsache, daß die Ansaugöffnungen in gleicher Höhe mit oder unmittelbar unter der Verengung des doppelt wirkenden Lufttrichters angeordnet sind, wird erreicht, daß die Wirkung der Verengung sowie die eines ggf. vorhandenen Hilfs-Lufttrichters beeinflußt wird, so daß einerseits das Mischverhältnis konstant bleiben wird und andererseits auch keine zusätzliche Kraftstoffzufuhr über eine vollastanreicherungsvorrichtung notwendig ist.

In Ausbildung der Erfindung ist vorgesehen, daß dem Sekundärluftstrom Motorabgas beigemischt wird, um die NOX-Emission des Verbrennungsmotors zu senken.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt
- Fig. 1: eine Vorrichtung zur Aufbereitung eines Kraftstoff-Luft-Gemisches gemäß der vorliegenden Erfindung in schematischer Schnittansicht,
- Fig. 2: den doppelt wirkenden Lufttrichter der Vorrichtung aus Fig. 1 in Schnittansicht,
- Fig. 3: eine zweite Ausführungsform eines doppelt wirkenden Lufttrichters gemäß der vorliegenden Erfindung und
- Fig. 4: eine dritte Ausführungsform eines doppelt wirkenden Lufttrichters gemäß der vorliegenden Erfindung.

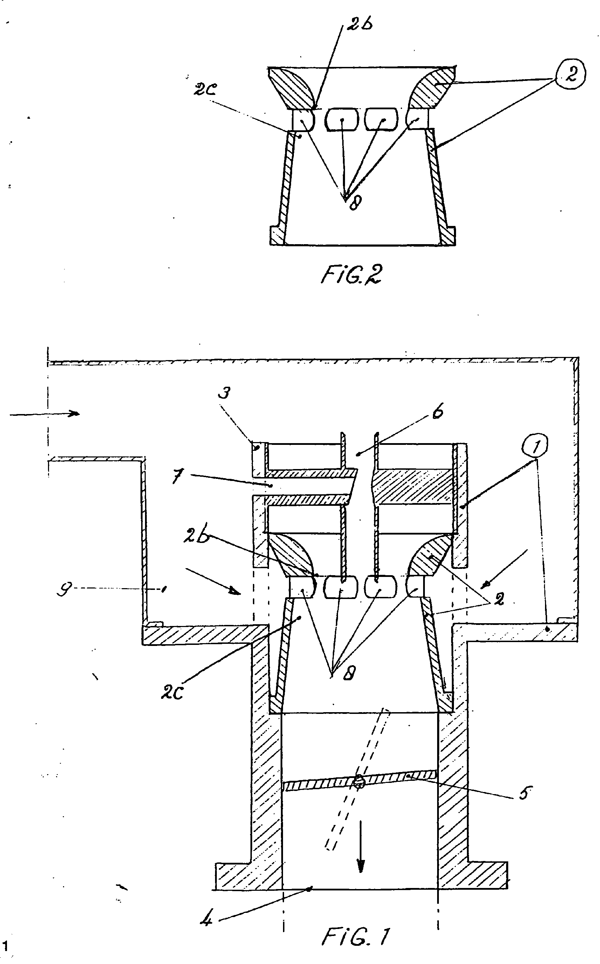

In Fig. 1 ist eine Vorrichtung 1 gemäß der vorliegenden Erfindung dargestellt, die dazu dient, ein Kraftstoff-Luft-Gemisch für einen Verbrennungsmotor herzustellen bzw. aufzubereiten. Die Vorrichtung 1 umfaßt einen doppelt wirkenden Lufttrichter 2, der einlaßseitig an eine Primärluftzuführleitung 3 und auslaßseitig an das Saugrohr 4 des ansonsten nicht näher dargestellten Motors mit der darin angeordneten Motordrosselklappe 5 angeschlossen ist. In der Primärluftzuführleitung 3 ist in an sich bekannter Weise ein Hilfs-Lufttrichter 6 vorgesehen, in dessen Verengungsbereich eine Kraftstoffzuführleitung 7 mündet, durch die eine Kraftstoffemulsion zum Hilfs-Lufttrichter 6 angesaugt werden kann. Der Hilfs-Lufttrichter 6 mündet in den Berich der Engstelle 2b des doppelt wirkenden Lufttrichters 2.

Der doppelt wirkende Lufttrichter 2 weist erfindungsgemäß im Anschluß an seine Engstelle 2b einen Expansionsabschnitt 2c auf, in dem sich der Strömungsquerschnitt kontinuierlich zum Saugrohr 4 hin vergrößert. Am Anfang dieses Expansionsabschnitts 2c weist der doppelt wirkende Lufttrichter 2 eine Mehrzahl von Ansaugöffnungen 8 auf, die gleichmäßig beabstandet entlang des Trichterumfangs verteilt angeordnet sind und durch die Sekundärluft aus einer Sekundärluftzuführleitung 9, die den doppelt wirkenden Lufttrichter 2 umgibt, in den Trichterinnenraum gesaugt werden kann, um das Kraftstoff-Luft-Gemisch abzumagern.

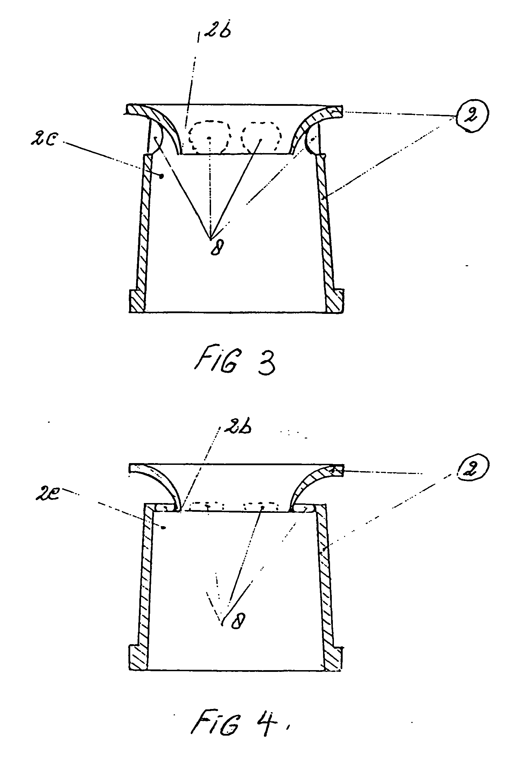

Der Lufttrichter 2 und die Form der Ansaugöffnungen 8 kann variieren. Entsprechende Varianten sind in den Figuren 2 bis 4 dargestellt. Es ist klar, daß die Ansaugöffnungen auch andere Formen haben können als die in den Figuren 2 bis 4 dargestellten.

Die Funktionsweise der Vorrichtung gemäß der Erfindung ist wie folgt:

Beim Leerlauf des Verbrennungsmotors wird das Kraftstoff-Luft-Gemisch von einem herkömmlichen Leerlaufgemisch-Aufbereitungssystem, das zu Vereinfachungszwecken nicht dargestellt ist, zusammengesetzt. Beim Öffnen der Drosselklappe 5 wird zunächst ein ebenfalls nicht dargestelltes Übergangsgemisch-Aufbereitungsystem in bekannter Weise zusammen mit dem Leerlaufsystem die Gemischbildung im Saugrohr 4 stromabwärts der Drosselklappe 5 bestimmen.

Durch Öffnen der Drosselklappe 5 wird infolge des Unterdrucks, der stromabwärts der Drosselklappe 5 gegenüber dem Leitungsbereich stromaufwärts des Hilfs-Lufttrichters 6 herrscht, ein Primärluftstrom durch die Primärluftzuführleitung 3 in die Vorrichtung 1 gesaugt. Dieser Primärluftstrom wird im Expansionsabschnitt 2c des doppelt wirkenden Lufttrichters 2 einen Unterdruck erzeugen, wodurch eine Druckdifferenz zwischen der Unterseite und Oberseite des Hilfs-Lufttrichters 6, wo atmosphärischer Druck herrscht, entsteht. Es wird dann ein Luftstrom durch den Hilfs-Lufttrichter 6 in Gang gesetzt, der an der Mündung der Kraftstoffzuführleitung 7 einen Unterdruck erzeugt, der eine Kraftstoff-Luft-Emulsion durch die Kraftstoffzuführleitung 7 ansaugt. Diese Emulsion wird sich mit dem Luftstrom in dem Hilfs-Lufttrichter 6 vermischen. Nachfolgend wird dieses Gemisch im Expansionsgebiet 2c des Lufttrichters 2 mit der angesaugten Primärluft gemischt, so daß sich ein Mischungsverhältnis λ < 1 einstellt.

Gleichzeitig entsteht an den Ansaugöffnungen 8 ein Unterdruck, so daß über diese ein Sekundärluftstrom in den doppelt wirkenden Lufttrichter 2 erfolgt, der sich mit dem erzeugten Kraftstoff-Luft-Gemisch vermischt und diesen auf ein Verhälltnis λ > 1 abmagert. Dem Sekundärluftstrom kann dabei auch Abgas des Motors beigemischt sein, um dessen Stickoxidausstoß zu verringern.

Wenn bei zunehmend geöffneter Drosselklappe 5 der Primärluftstrom und damit auch das Ansaugen der Kraftstoff-Luft-Emulsion progressiv zunimmt, wird zugleich auch die Sekundärluftzufuhr progressiv zunehmen, wodurch sich ein konstantes Mischungsverhältnis Kraftstoff-Luft einstellt.

Da die Luftansaugöffnungen 8 in gleicher Höhe mit bzw. gleich unter der Engstelle des doppelt wirkenden Lufttrichters 2 angeordnet sind, wird bei einer größeren Drosselklappenöffnung zum Vollastbereich kein Drosseleffekt auftreten, wenn der Unterdruck unter der Drosselklappe wegfällt, da der Verbrennungsmotor dann zuerst an den Ansaugöffnungen 8 der Sekundärluftzufuhr saugen wird, so daß die Luftzufuhr nicht ins Stocken gerät und einen hohen Füllungsgrad gewährleistet und das physikalische Wirkungsprinzip erhalten bleibt, so daß in den Primärluftstrom keine zusätzliche Kraftstoffzufuhr über eine Vollastanreichungseinrichtung notwendig ist, um den notwendigen Füllungsgrad zu erreichen. Dies ergibt in der Beschleunigung einen sehr niedrigen Kraftstoffverbrauch.

Die Vorrichtung gemäß der Erfindung kann auch bei Verbrennungsmotoren mit indirekter Kraftstoffeinspritzung eingesetzt werden. In diesem Fall wird der doppelt wirkenden Lufttrichter ebenfalls stromaufwärts der Drosselklappe angeordnet, wobei an Stelle des Hilfs-Lufttrichters eine Einspritzdüse oberhalb der Verengung des Lufttrichters eingesetzt wird.

## Patentansprüche

1. Verfahren zum Zuführen eines Kraftstoff-Luft-Gemisches (λ) an einen Verbrennungsmotor, bei dem aus einem Primärluftstrom und einem Kraftstoff ein Kraftstoff-Primärluft-Gemisch hergestellt wird und dieses Kraftstoff-Primärluft-Gemisch durch einen angesaugten Sekundärluftstrom in einem doppelt wirkenden Lufttrichter (2) abgemagert wird, bevor das Kraftstoff-Luft-Gemisch (λ) die Drosselklappenöffnung des Verbrennungsmotors durchströmt, **dadurch gekennzeichnet, daß** aus dem Primärluftstrom und dem Kraftstoff ein Kraftstoff-Primärluft-Gemisch mit einem Mischverhältnis λ < 1 hergestellt wird und anschließend stromabwärts von der Mischstelle am Anfang eines Expansionsabschnitts (2c) Sekundärluft auf gleicher Höhe mit der Trichterengstelle oder gleich im Anschluß an die Trichterengstelle (2b) durch Luftansaugöffnungen (8) in den Tichter gesaugt und mit dem Kraftstoff-Primärluft-Gemisch und gegebenenfalls mit weiterer Primärluft vermischt wird und so ein Kraftstoff-Luft-Gemisch (λ) mit einem Mischverhältnis λ > 1 hergestellt wird.

2. Verfahren nach Anspruch 1, **dadurch gekennzeichnet, daß** der Primärluftstrom über die Engstelle (2b) des doppelt wirkenden Lufttrichters (2) angesaugt wird.

3. Verfahren nach Anspruch 2, **dadurch gekennzeichnet, daß** der Kraftstoff ebenfalls über die Trichterengstelle (2b) angesaugt wird.

4. Verfahren nach Anspruch 1 oder 2, **dadurch gekennzeichnet, daß** der Kraftstoff in den Primärluftstrom eingespritzt wird.

5. Verfahren nach einem der vorherigen Ansprüche, **dadurch gekennzeichnet, daß** dem Sekundärluftstrom Abgas zugemischt wird, um die NOₓ-Emission des Verbrennungsmotors zu senken.

6. Vorrichtung zur Aufbereitung eines Kraftstoff-Luft-Gemisches für Verbrennungsmotoren mit einem doppelt wirkenden Lufttrichter (2), der einlaßseitig an eine Primärluftzuführleitung (3) und auslaßseitig über einen Expansionsabschnitt (2c) des Lufttrichters (2), der eine Mischkammer bildet, in welcher ein durch die Primärluftzuführleitung (3) zugeführter Primärluftstrom und ein durch die Kraftstoffzuführleitung (7) zugeführter Kraftstoff bzw. eine Kraftstoffemulsion zu einem Kraftstoff-Luft-Gemisch vermischt werden, an die Kraftstoff-Luft-Gemisch-Zuführleitung (4) eines Verbrennungsmotors stromaufwärts von der Motordrosselklappe (5) anschließbar ist, wobei in dem Expansionsabschnitt (2c) Luftansaugöffnungen (8) vorgesehen sind, durch welche Sekundärluft angesaugt werden kann, **dadurch gekennzeichnet, daß** die Luftansaugöffnungen (8) am Anfang des Expansionsabschnitts (2c) des Lufttrichters (2) in gleicher Höhe mit der Trichterengstelle (2b) oder unmittelbar der Trichterengstelle (2b) nachgeordnet vorgesehen sind und daß die Luftansaugöffnungen (8) an eine Sekundärluftleitung (9) angeschlossen sind, wobei stromaufwärts der Primärluftzufiihrleitung (3) und der Sekundärluftleitung (9) ein Luftraum vorgesehen ist, von welchem die Primärluftzuführleitung (3) und die Sekundärluftleitung (9) ausgehen.

## Claims

1. A method for supplying a fuel/air mixture (λ) to an internal combustion engine with which a fuel/primary air mixture is produced from a primary airflow and a fuel, and this fuel/primary air mixture is thinned in a dual-effect air funnel (2) by a secondary airflow sucked in before the fuel/air mixture (λ) flows through the throttle valve opening of the internal combustion engine, **characterised in that** a fuel/primary air mixture with a mix ratio of λ < 1 is produced from the primary airflow and the fuel, and then, downstream of the mixing point at the start of an expansion section (2c), secondary air at the same height as the narrow point of the funnel or just at the join to the narrow point of the funnel (2b) is sucked through air intake openings (8) into the funnel and mixed with the fuel/primary air mixture, and if appropriate with further primary air, and so a fuel/air mixture (λ) with a mix ratio λ > 1 is produced.

2. The method according to Claim 1, **characterised in that** the primary airflow is sucked in via the narrow point (2b) of the dual-effect air funnel (2).

3. The method according to Claim 2, **characterised in that** the fuel is also sucked in via the narrow point of the funnel (2b).

4. The method according to Claim 1 or 2, **characterised in that** the fuel is injected into the primary airflow.

5. The method according to any of the preceding claims, **characterised in that** exhaust gas is mixed with the secondary airflow in order to reduce the NOx emission of the internal combustion engine.

6. An apparatus for preparing a fuel/air mixture for internal combustion engines with a dual-effect air funnel (2) which can be attached on the inlet side to a primary air supply line (3) and on the outlet side via an expansion section (2c) of the air funnel (2) which forms a mixing chamber in which a primary airflow supplied by the primary air supply line (3) and a fuel or a fuel emulsion supplied by the fuel supply line (7) are mixed to form a fuel/air mixture, to the fuel/air mixture supply pipe (4) of an internal combustion engine upstream of the engine throttle valve (5), air intake openings (8) being provided in the expansion section (2c) through which secondary air can be sucked in, **characterised in that** the air intake openings (8) are provided at the start of the expansion section (2c) of the air funnel (2) at the same height as the narrow point of the funnel (2b) or directly downstream of the narrow point of the funnel (2b), and that the air intake openings (8) are attached to a secondary air line (9), an air chamber being provided upstream of the primary air supply line (3) and the secondary air line (9), from which the primary air supply line (3) and the secondary air line (9) extend.

## Revendications

1. Procédé pour l'alimentation d'un mélange carburant - air (λ) à un moteur à combustion, où on fabrique à partir d'un courant d'air primaire et d'un carburant, un mélange carburant - air primaire et où ce mélange carburant - air primaire est amaigri par un courant d'air secondaire aspiré dans un entonnoir d'air (2) à double action avant que le mélange carburant - air (λ) ne traverse l'ouverture à clapets d'étranglement du moteur à combustion, **caractérisé en ce qu'**on fabrique un mélange carburant - air primaire avec un rapport de mélange λ < 1 à partir du courant d'air primaire et du carburant, puis en ce que l'air secondaire est aspiré en aval de l'endroit de mélange au début d'un tronçon d'expansion (2C) au même niveau que l'endroit d'étranglement d'entonnoir ou juste après l'endroit d'étranglement d'entonnoir (2B) à travers les ouvertures d'aspiration d'air (8) dans l'entonnoir et **en ce que** ledit air secondaire est mélangé avec le mélange carburant - air primaire et éventuellement avec de l'air primaire supplémentaire et **en ce que** de cette manière on produit un mélange carburant - air (λ) avec un rapport de mélange λ > 1.

2. Procédé selon la revendication 1, **caractérisé en ce que** le courant d'air primaire est aspiré via l'endroit d'étranglement (2b) de l'entonnoir d'air (2) à double action.

3. Procédé selon la revendication 2, **caractérisé en ce que** le carburant est également aspiré via l'endroit d'étranglement de l'entonnoir (2b).

4. Procédé selon la revendication 1 ou 2, **caractérisé en ce que** le carburant est injecté dans le courant d'air primaire.

5. Procédé selon une des revendications précédentes, **caractérisé en ce qu'**on ajoute des gaz d'échappement au courant d'air secondaire pour abaisser les émissions NOₓ du moteur à combustion interne.

6. Dispositif pour la préparation d'un mélange carburant - air pour des moteurs à combustion interne avec un entonnoir d'air (2) à double action qui peut être raccordé du côté de l'entrée à une conduite d'alimentation primaire (3) et du côté de la sortie par l'intermédiaire d'un tronçon d'expansion (2c) de l'entonnoir d'air (2) formant une chambre dans laquelle chambre un courant d'air primaire alimenté par la conduite d'alimentation d'air primaire (3) et un carburant, respectivement une émulsion de carburant alimenté par la conduite d'alimentation de carburant (7) sont mélangés en un mélange carburant - air à la conduite d'alimentation de mélange d'air - carburant (4) d'un moteur à combustion interne en amont du clapet d'étranglement de moteur (5) ; des ouvertures d'aspiration d'air (8) étant prévues dans le tronçon d'expansion (2c) par lesquelles de l'air secondaire peut être aspiré, **caractérisé en ce que** les ouvertures d'aspiration d'air (8) sont prévues au début du tronçon d'expansion (2c) de l'entonnoir d'air (2) à la même hauteur que l'endroit d'étranglement de l'entonnoir (2b) ou prévues directement en aval de l'endroit d'étranglement de l'entonnoir (2b) et **en ce que** les ouvertures d'aspiration de l'air (8) sont raccordées à une conduite d'air secondaire (9) ; un espace d'air étant prévu en amont de la conduite d'alimentation d'air primaire (3) et par rapport à la conduite d'alimentation d'air secondaire (9) à partir duquel espace d'air partent la conduite d'alimentation d'air primaire (3) et la conduite d'air secondaire (9).
